# EUROPÄISCHE PATENTSCHRIFT

(11) **EP 2 543 130 B1**
(45) Veröffentlichungstag und Bekanntmachung des Hinweises auf die Patenterteilung: **04.10.2017**
(21) Anmeldenummer: 11704734.0
(22) Anmeldetag: 21.02.2011
(51) Int. Cl.: H02K 5/22, H02K 11/00, H02K 3/50, H02K 3/52

(54) **ELEKTROMOTOR MIT GEHÄUSE UND ANORDNUNG ZUM BESTIMMEN DER DREHSTELLUNG EINES ROTORS EINES ELEKTROMOTORS**
ELECTRIC MOTOR COMPRISING A HOUSING AND ASSEMBLY FOR DETERMINING THE ROTATIONAL POSITION OF A ROTOR OF AN ELECTRIC MOTOR
MOTEUR ÉLECTRIQUE COMPRENANT UN CARTER ET AGENCEMENT POUR DÉTERMINER LA POSITION DE ROTATION D'UN ROTOR DE MOTEUR ÉLECTRIQUE

(30) Priorität: 03.03.2010 DE 102010010241
(43) Veröffentlichungstag der Anmeldung: 09.01.2013
(73) Patentinhaber: Sew-Eurodrive GmbH & Co. KG, 76646 Bruchsal (DE)
(72) Erfinder: RIFFEL, Martin, 76689 Karlsdorf-Neuthard (DE)
(86) Internationale Anmeldenummer: PCT/EP2011/000814
(87) Internationale Veröffentlichungsnummer: WO 2011/107224

(56) Entgegenhaltungen:
- EP-A2- 2 107 669
- WO-A1-2006/083128
- DE-U1-202008 014 658
- JP-A- 11 136 327
- US-B1- 6 740 999

## Beschreibung

Die Erfindung betrifft einen Elektromotor mit Gehäuse und eine Anordnung zum Bestimmen der Drehstellung eines Rotors eines Elektromotors.

**Aus der** DE 10 2008 034 413 A1 **ist bekannt,** dass Statorwicklungsdrahtenden eines Elektromotors an ein Stanz-Biegeteil herangeführt werden und dort ein Litzenkabel elektrisch verbunden wird, das aus dem Stator herausgeführt wird. Die Verschaltung der Statorwicklungen zu einer Sternschaltung oder Dreieckschaltung wird außerhalb oder innerhalb des Stators ausgeführt.

WO 2006/083128 A1 offenbart einen Elektromotor mit Gehäuse (220), wobei der Elektromotor einen Stator (200) aufweist, der mit dem Gehäuse (220) verbunden ist, wobei der Motor zumindest eine aus Wicklungsdraht gebildete Wicklung (130) aufweist, wobei die Enden eines jeweiligen Wicklungsdrahts an ein jeweiliges Kontaktteil (400) geführt und mit diesem elektrisch verbunden sind, wobei das Kontaktteil (400) in einem Halteteil (300) aufgenommen und verbunden ist, wobei das Halteteil (300) mit dem Stator (200) und/oder Gehäuse (220) verbunden ist, und jedes Kontaktteil (400) einen jeweiligen elastisch auslenkbaren Bereich (420) aufweist, der von einem jeweils zugeordnetem Leiterbahnbereich einer Leiterplatte elektrisch kontaktiert und angedrückt wird, indem die Leiterplatte gegen die Kontaktteile (400) drückt. **Aus der** DE 20 2008 014 658 U1 **ist ein bürstenloder Gleichstrommotor bekannt.**

Der Erfindung liegt daher die Aufgabe zugrunde, eine Elektromotor weiterzubilden, wobei eine besonders schnelle und daher kostengünstige Montage ermöglicht werden soll.

Erfindungsgemäß wird die Aufgabe bei dem Elektromotor mit Gehäuse nach den in Anspruch 1 angegebenen Merkmalen gelöst.

Von Vorteil ist dabei, dass eine besonders einfache und schnelle und somit kostengünstige Statorkontaktierung erreichbar ist. Außerdem ist in der Leiterplatte die Verschaltung des Stators ausführbar, insbesondere bei Ausführung des Elektromotors als Drehstrommotor die Verschaltung in Sternschaltung oder Dreieckschaltung. Des Weiteren sind Toleranzen oder thermisch bedingte Ausdehnungen einfach kompensierbar, da ein elastischer Bereich vorgesehen ist, der in axialer Richtung auslenkbar ist.

**Erfindungsgemäß** ist die Verschaltung der Statorwicklungen, insbesondere die Verschaltung in Sternschaltung oder Dreieckschaltung, in der Leiterplatte ausgeführt. Von Vorteil ist dabei, dass die Leiterplatte in Massenfertigung ausführbar ist. Auch Ströme von mehr als 5 oder 10 Ampere sind mittels der Leiterbahnen der Leiterplatte beim Verschalten durchleitbar.

**Erfindungsgemäß** weist der Rotor an seinem der Leiterplatte zugewandten Endbereich eine Magnetstruktur auf, der ein auf der Leiterplatte angeordneter Sensor zugeordnet ist, so dass die Drehstellung des Rotors detektierbar ist. Von Vorteil ist dabei, dass nicht nur die Statorkontaktierung und Verschaltung der Statorwicklungen sondern auch die Detektion des Magnetfeldes und die Auswertung der Sensorsignale auf der Leiterplatte realisierbar sind.

Bei einer vorteilhaften Ausgestaltung ist das Kontaktteil metallisch ausgeführt und/oder das Kontaktteil ist ein Stanz-Biegeteil. Von Vorteil ist dabei, dass eine besonders einfache Herstellung ermöglicht ist.

Bei einer vorteilhaften Ausgestaltung ist der Stator mit dem Gehäuse kraftschlüssig, insbesondere thermisch aufgeschrumpft, und/oder formschlüssig verbunden. Von Vorteil ist dabei, dass Stator und Gehäuse fest verbunden sind und somit auch in ihrer relativ zueinander axialen Lage fest gelegt sind. Als Gehäuse ist sogar der Stator selbst verwendbar.

Bei einer vorteilhaften Ausgestaltung ist die Leiterplatte formschlüssig mit dem Gehäuse verbunden, insbesondere mittels Schrauben am Gehäuse befestigt ist oder ins Gehäuse eingeklipst ist. Von Vorteil ist dabei, dass eine sichere und feste Verbindung ausführbar ist.

Bei einer vorteilhaften Ausgestaltung sind Schrauben und/oder Kontaktteile auf der Leiterplatte kreisförmig angeordnet, insbesondere konzentrisch zur Rotorachse des Elektromotors. Von Vorteil ist dabei, dass zu jedem Kontaktteil eine Schraube zuordenbar ist, so dass eine möglichst gleichmäßige Kraftverteilung entlang der Leiterplatte ausführbar ist.

Bei einer vorteilhaften Ausgestaltung ist das Halteteil aus einem elektrisch isolierenden Stoff, wie Kunststoff, gefertigt. Von Vorteil ist dabei, dass einerseits elektrische Isolation und andererseits mechanische Haltefunktion mittels des Halteteils ausführbar sind.

Bei einer vorteilhaften Ausgestaltung weist der Stator ein Blechpaket auf, an dessen einem axialen Endbereich das Halteteil angeordnet ist und die Statorwicklungen auf das Halteteil und Blechpaket aufgewickelt sind. Von Vorteil ist dabei, dass das Halteteil fest am Stator verbunden ist. Auch am anderen axialen Endbereich des Statorblechpakets ist ein Halteteil vorsehbar, dass allerdings nur der lagerichtigen Formung der Wicklungsdrähte und der Isolation dient.

Bei einer vorteilhaften Ausgestaltung weist die Leiterplatte elektronische Bauelemente zur Auswertung der Sensorsignale auf. Von Vorteil ist dabei, dass eine Mehrfachverwendung der Leiterplatte ermöglicht ist.

Bei einer vorteilhaften Ausgestaltung ist der Rotor des Motors einseitig gelagert auf der von der Leiterplatte abgewandten Seite. Von Vorteil ist dabei, dass auf der der Lagerung abgewandten Seite die Bestimmung des Drehwinkels ermöglicht ist.

Bei der Erfindung ist die Verschaltung des Stators in der Leiterplatte ausgeführt. Von Vorteil ist dabei, dass eine integrierte Ausführung ermöglicht ist.

Die Erfindung wird nun anhand von Abbildungen näher erläutert:
In der Figur 1 ist ein erfindungsgemäßes Gerät gezeigt, das einen Elektromotor umfasst.

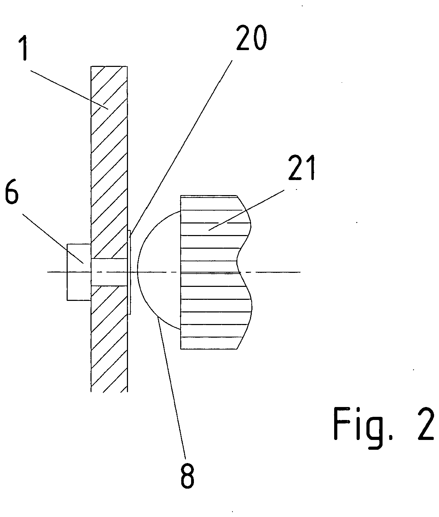

In der Figur 2 ist ein vergrößerter Ausschnitt der Figur 1 gezeigt.
In der Figur 3 ist eine Draufsicht der Leiterplatte gezeigt.

Dabei ist ein Rotor 5 in einem Stator vorgesehen und einseitig mittels Lagern 3 gelagert. Die mit dem Rotor 5 verbundene Rotorwelle ist mit einem Verzahnungsteil 4 verbunden, so dass im Gehäuse des Geräts nicht nur ein Stator eines Elektromotors angeordnet ist sondern auch ein Getriebe.

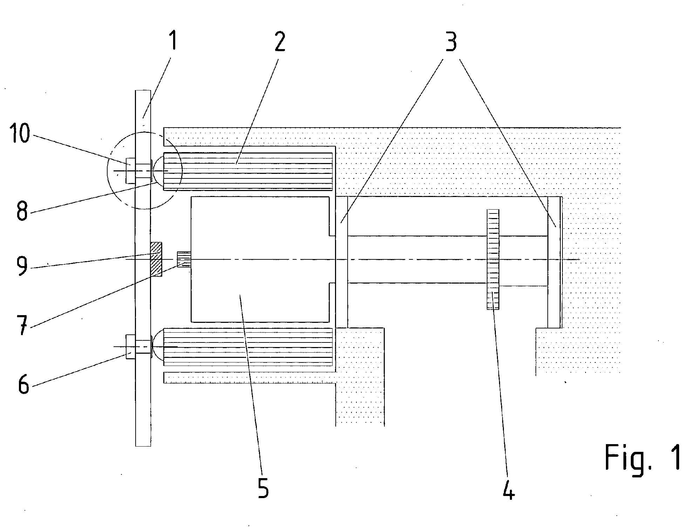

Ein weiteres, mit dem Verzahnungsteil 4 im Eingriff stehendes Verzahnungsteil ist in der Figur 1 nicht gezeigt.

An seinem vom Verzahnungsteil 4 abgewandten Ende ist am Rotor 5 Dauermagnetstruktur 7, insbesondere ein Permanentmagnet, angeordnet, der mit dem Rotor 5 mitdrehbar vorgesehen ist.

Der Stator des Elektromotors ist mit dem Gehäuse fest verbunden, beispielsweise eingeschrumpft oder andersartig kraftschlüssig und/oder formschlüssig verbunden.

Der Stator weist ein Blechpaket auf, auf dem die Statorwicklung 2 aufgewickelt ist. Hierzu ist auch eine Ausführung des Blechpakets mit Einzelzähnen vorteilhaft ausführbar.

Das Blechpaket ist an seinem der Leiterplatte zugewandten Endbereich mit einem elektrisch isolierenden Halteteil 21 verbunden, das zur Aufnahme von Kontaktteilen 8 vorgesehen ist.

Der Wicklungsdraht der Statorwicklung 2 wird ans Kontaktteil 8 herangeführt und dort elektrisch verbunden, beispielsweise schweißverbunden und/oder lötverbunden. Außerdem ist eine Zugentlastung realisierbar am Kontaktteil 8.

Die Kontaktteile 8 sind vorzugsweise als Stanz-Biegeteile ausgeführt und in das Halteteil 21 eingesteckt, insbesondere formschlüssig und/oder kraftschlüssig verbunden. Hierzu eignet sich besonders eine jeweilige Vertiefung im Halteteil 21, in welches ein jeweiliges Kontaktteil 8 einsteckbar ist.

Am Gehäuse des Elektromotors ist eine Leiterplatte 1 mittels Schrauben 6 befestigt.

Das Kontaktteil 8 weist auch zumindest einen jeweiligen der Leiterplatte zugewandten elastisch verformbaren Bereich auf, mit welchem eine kraftschlüssige und elektrische Kontaktierung ermöglicht ist. Dabei wird die Auslenkung des elastischen Bereichs erzeugt beim Festschrauben der Leiterplatte auf das Gehäuse des Geräts.

Die Schrauben 6 sind vorzugsweise auf einem Kreis angeordnet und in Umfangsrichtung regelmäßig voneinander beabstandet. Hierdurch ist ein gleichmäßiges Andrücken erreichbar. Die Anzahl der Schrauben in Umfangsrichtung ist vorzugsweise größer als vier.

Wichtig ist dabei, dass das Halteteil 21 mit dem Stator-Blechpaket fest verbunden ist und Aufnahmen für die Kontaktteile 8 aufweist.

Auf der leiterplatte wird die Verschaltung der Statorwicklung 2, beispielsweise in Stern- oder Dreieckschaltung, ausgeführt.

Außerdem weist die Leiterplatte Pads 20, also Leiterbahnenbereiche auf, mit welchen eine Kontaktierung, also elektrische Verbindung, zu den Kontaktteilen 8, insbesondere zu dem elastischen Bereich der Kontaktteile 8 ermöglicht wird.

Da der Stator des Elektromotors im Gehäuse festgelegt ist und das Halteteil mit dem Stator fest verbunden ist, sind auch die in das Halteteil eingesteckt verbundenen Kontaktteile 8 in ihrer Position zum Gehäuse des Geräts festgelegt. Da wiederum die Leiterplatte 1 am Gehäuse angeschraubt wird und somit in ihrer Position festgelegt wird, ist eine Auslenkung des elastischen Bereichs des jeweiligen Kontaktteils vorgebbar. Zusätzlich werden Abweichungen innerhalb der Fertigungstoleranzen oder thermische Ausdehnungen kompensierbar gemacht. Des Weiteren ist die Leiterplatte 1 mittels der Mehrzahl an Schrauben und auch Kontaktierungen schwingungsdämpfend befestigt. Rüttelschwingungen werden also vermindert.

Auf der Leiterplatte 1 ist ein Sensor 9mittig zur Rotorachse angeordnet und bestückt. Vorzugsweise ist hierbei ein Kreuz-Hall-Sensor verwendet. Es sind aber auch andere Sensoren verwendbar. Die Leiterplatte 1 ist auch mit weiteren elektronischen Bauelementen bestückt, so dass eine Auswertung der Sensorsignale ermöglicht ist. Mittels des Sensors 9 ist eine Detektion der Winkellage des Rotors 5 ermöglicht.

Die axiale und radiale und umfangswinkelbezogene Positionierung der Leiterplatte ist also sehr genau auszuführen, um eine fehlerfreie Bestimmung der Winkellage des Rotors 5 zu erreichen. Hierzu ist die Festlegung der Leiterplatte 1 am Gehäuse mittels Schrauben 6 vorteilhaft.

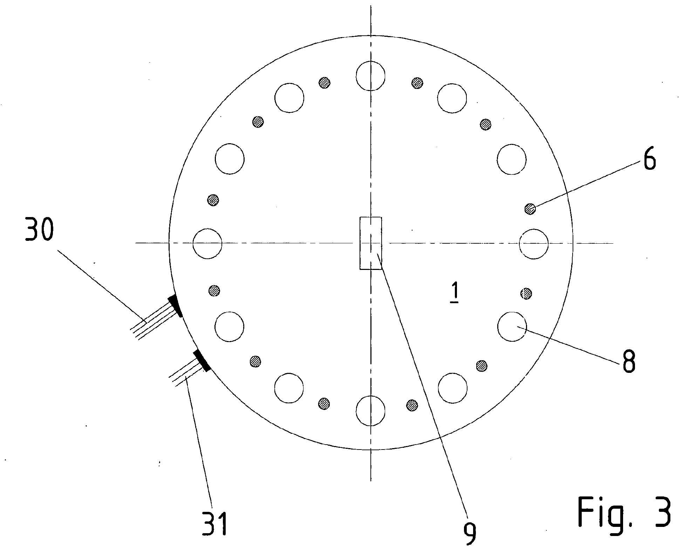

Wie in Figur 3 gezeigt, sind nach außen führende Signalleitungen 30 und Versorgungsleitungen 31 mit Leiterbahnen der Leiterplatte 1 elektrische verbunden. Auf diese Weise sind einerseits die Sensorsignale herausführbar an eine weitere elektrische Vorrichtung und andererseits eine elektrische Versorgung des Elektromotors in einfacher Weise ausführbar. Zur Kontaktierung der Leitungen (30, 31) ist vorzugsweise ein Steckverbinder vorgesehen, dessen Steckverbinderteil auf der Leiterplatte 1 lötverbunden ist und aus dessen mit dem Steckverbinderteil verbindbares Gegensteckverbinderteil die Leitungen herausgeführt sind.

### Bezugszeichenliste

1 Leiterplatte
2 Statorwicklung
3 Lager
4 Verzahnungsteil
5 Rotor
6 Schraube
7 Dauermagnetstruktur, Permanentmagnet
8 Kontaktteil
9 Sensor
20 Leiterbahn, elektrisch leitfähiger Bereich der Leiterplatte, Pad
21 Halteteil

30 Signalleitungen
31 Versorgungsleitungen

## Patentansprüche

1. Elektromotor mit Gehäuse,
wobei der Elektromotor einen Stator aufweist, der mit dem Gehäuse verbunden ist,
wobei der Stator zumindest eine aus Statorwicklungsdraht gebildete Statorwicklung (2) aufweist, wobei die Enden eines jeweiligen Statorwicklungsdrahts an ein jeweiliges Kontaktteil (8) geführt und mit diesem elektrisch verbunden sind,
wobei das Kontaktteil (8) in einem Halteteil (21) aufgenommen und verbunden, also kraftschlüssig verbunden oder eingeklipst, ist,
wobei das Halteteil (21) mit dem Stator und Gehäuse verbunden ist, wobei jedes Kontaktteil (8) einen jeweiligen elastisch auslenkbaren Bereich aufweist, der von einem jeweils zugeordnetem Leiterbahnbereich einer Leiterplatte (1) elektrisch kontaktiert und angedrückt wird,
**wobei indem ein Bereich des jeweiligen Kontaktteils (8) ausgelenkt ist, indem die Leiterplatte (1) gegen die Kontaktteile (8) drückt, wobei die Leiterplatte (1) am Gehäuse befestigt ist,**
**wobei die Verschaltung der Statorwicklungen (2) in der Leiterplatte (1) ausgeführt** ist,
**wobei der Rotor (5) an seinem der Leiterplatte (1) zugewandten Endbereich eine Magnetstruktur aufweist, der ein auf der Leiterplatte (1) angeordneter Sensor (9) zugeordnet ist, so dass die Drehstellung des Rotors (5) detektierbar ist.**

2. Elektromotor nach Anspruch 1,
**dadurch gekennzeichnet, dass**
das Kontaktteil (8) metallisch ausgeführt ist und/oder dass das Kontaktteil (8) ein Stanz-Biegeteil ist.

3. Elektromotor nach mindestens einem der vorangegangenen Ansprüche,
**dadurch gekennzeichnet, dass**
der Stator mit dem Gehäuse kraftschlüssig, insbesondere thermisch aufgeschrumpft, und/oder formschlüssig verbunden ist.

4. Elektromotor nach mindestens einem der vorangegangenen Ansprüche,
**dadurch gekennzeichnet, dass**
die Leiterplatte (1) formschlüssig mit dem Gehäuse verbunden ist, insbesondere mittels Schrauben (6) am Gehäuse befestigt ist oder ins Gehäuse eingeklipst ist.

5. Elektromotor nach mindestens einem der vorangegangenen Ansprüche,
**dadurch gekennzeichnet, dass**
Schrauben (6) und/oder **Kontaktteile (8) auf der Leiterplatte (1) kreisförmig angeordnet sind, insbesondere konzentrisch zur Rotorachse des Elektromotors.**

6. Elektromotor nach mindestens einem der vorangegangenen Ansprüche,
**dadurch gekennzeichnet, dass**
**die Verschaltung eine Sternschaltung oder Dreieckschaltung ist.**

7. Elektromotor nach mindestens einem der vorangegangenen Ansprüche,
**dadurch gekennzeichnet, dass**
das Halteteil (21) aus einem elektrisch isolierenden Stoff, wie Kunststoff, gefertigt ist.

8. Elektromotor nach mindestens einem der vorangegangenen Ansprüche,
**dadurch gekennzeichnet, dass**
der Stator ein Blechpaket aufweist, an dessen einem axialen Endbereich das Halteteil (21) angeordnet ist und die Statorwicklungen (2) auf das Halteteil (21) und Blechpaket aufgewickelt sind.

9. Elektromotor nach mindestens einem der vorangegangenen Ansprüche,
**dadurch gekennzeichnet, dass**
die Leiterplatte (1) elektronische Bauelemente zur Auswertung der Sensorsignale aufweist.

10. Elektromotor nach mindestens einem der vorangegangenen Ansprüche,
**dadurch gekennzeichnet, dass**
der Rotor (5) des Motors einseitig gelagert ist auf der von der Leiterplatte (1) abgewandten Seite.

## Claims

1. Electric motor with housing,
wherein the electric motor has a stator which is connected to the housing,
wherein the stator has at least one stator winding (2) formed from stator winding wire, wherein the ends of a respective stator winding wire are led onto a respective contact part (8) and are electrically connected thereto,
wherein the contact part (8) is received and connected in a holding part (21), i.e. connected in a force-locking manner or clipped in,
wherein the holding part (21) is connected to the stator and housing,
wherein each contact part (8) has a respective elastically deflectable region which is electrically contacted and pressed on by a respectively associated conductor track region of a printed circuit board (1),
wherein in that a region of the respective contact part (8) is deflected in that the printed circuit board (1) is pressed against the contact parts (8), wherein the printed circuit board (1) is fastened to the housing,
wherein the wiring of the stator windings (2) is implemented in the printed circuit board (1),
wherein the rotor (5) has, at its end region facing the printed circuit board (1), a magnetic structure with which a sensor (9) arranged on the printed circuit board (1) is associated, so that the rotational position of the rotor (5) is detectable.

2. Electric motor according to claim 1,
**characterised in that**
the contact part (8) is made of metal and/or **in that** the contact part (8) is a stamped and bent part.

3. Electric motor according to at least one of the preceding claims,
**characterised in that**
the stator is connected to the housing in a force-locking manner, in particular thermally shrunk on, and/or is connected in a form-locking manner.

4. Electric motor according to at least one of the preceding claims,
**characterised in that**
the printed circuit board (1) is connected to the housing in a form-locking manner, in particular is fastened to the housing by means of screws (6) or is clipped into the housing.

5. Electric motor according to at least one of the preceding claims,
**characterised in that**
screws (6) and/or contact parts (8) are arranged on the printed circuit board (1) in a circular shape, in particular concentrically with respect to the rotor axis of the electric motor.

6. Electric motor according to at least one of the preceding claims,
**characterised in that**
the wiring is a star connection or delta connection.

7. Electric motor according to at least one of the preceding claims,
**characterised in that**
the holding part (21) is made of an electrically insulating material, such as plastic.

8. Electric motor according to at least one of the preceding claims,
**characterised in that**
the stator has a laminated core, at one axial end region of which the holding part (21) is arranged and the stator windings (2) are wound on the holding part (21) and laminated core.

9. Electric motor according to at least one of the preceding claims,
**characterised in that**
the printed circuit board (1) has electronic components for evaluating the sensor signals.

10. Electric motor according to at least one of the preceding claims,
**characterised in that**
the rotor (5) of the motor is overhung-mounted on the side facing away from the printed circuit board (1).

## Revendications

1. Moteur électrique comprenant un carter,
sachant que le moteur électrique présente un stator qui est relié au carter,
sachant que le stator présente au moins un enroulement statorique (2) formé de fil métallique d'enroulement statorique, sachant que les extrémités d'un fil métallique d'enroulement statorique respectif sont dirigées sur une pièce de contact respective (8) et sont reliées électriquement à celle-ci,
sachant que la pièce de contact (8) est reçue et reliée, donc est reliée à force ou clipsée, dans une pièce de maintien (21),
sachant que la pièce de maintien (21) est reliée au stator et au carter,
sachant que chaque pièce de contact (8) présente une région respective pouvant être élastiquement déviée, qui est pressée et mise en contact électrique par une région de piste conductrice respectivement associée d'une carte à circuits imprimés (1),
sachant qu'une région de la pièce de contact respective (8) est déviée par le fait que la carte à circuits imprimés (1) exerce une pression contre les pièces de contact (8), sachant que la carte à circuits imprimés (1) est fixée sur le carter,
sachant que le câblage des enroulements statoriques (2) est réalisé dans la carte à circuits imprimés (1),
sachant que le rotor (5) présente, sur sa région terminale tournée vers la carte à circuits imprimés (1), une structure magnétique à laquelle est associé un capteur (9) disposé sur la carte à circuits imprimés (1), de sorte que la position de rotation du rotor (5) peut être détectée.

2. Moteur électrique selon la revendication 1, **caractérisé en ce que** la pièce de contact (8) est réalisée métallique et/ou **en ce que** la pièce de contact (8) est une pièce découpée et pliée.

3. Moteur électrique selon au moins une des revendications précédentes, **caractérisé en ce que** le stator est relié au carter par complémentarité de forme et/ou à force, en particulier en étant emmanché par frettage sous l'action de chaleur.

4. Moteur électrique selon au moins une des revendications précédentes, **caractérisé en ce que** la carte à circuits imprimés (1) est reliée au carter par complémentarité de forme, en particulier est clipsée dans le carter ou est fixée sur le carter au moyen de vis (6).

5. Moteur électrique selon au moins une des revendications précédentes, **caractérisé en ce que** les vis (6) et/ou les pièces de contact (8) sont disposées en forme de cercle sur la carte à circuits imprimés (1), en particulier concentriquement à l'axe du rotor du moteur électrique.

6. Moteur électrique selon au moins une des revendications précédentes, **caractérisé en ce que** le câblage est une connexion en étoile ou une connexion en triangle.

7. Moteur électrique selon au moins une des revendications précédentes, **caractérisé en ce que** la pièce de maintien (21) est fabriquée en un matériau électriquement isolant, matière plastique par exemple.

8. Moteur électrique selon au moins une des revendications précédentes, **caractérisé en ce que** le stator présente un empilage de tôles à une des régions terminales axiales duquel est disposée la pièce de maintien (21), et les enroulements statoriques (2) sont enroulés sur la pièce de maintien (21) et l'empilage de tôles.

9. Moteur électrique selon au moins une des revendications précédentes, **caractérisé en ce que** la carte à circuits imprimés (1) présente des composants électroniques pour l'interprétation des signaux du capteur.

10. Moteur électrique selon au moins une des revendications précédentes, **caractérisé en ce que** le rotor (5) du moteur est monté d'un seul côté, sur le côté éloigné de la carte à circuits imprimés (1).
